# EUROPEAN PATENT APPLICATION

(11) **EP 4 811 160 A1**
(43) Date of publication of application: **23.09.2026**
(21) Application number: 25305372.2
(22) Date of filing: 18.03.2025
(51) Int. Cl.: G06F 16/30, G06F 40/30, H04L 67/306, H04W 8/18, H04W 48/18

(54) **SEMANTIC BASED ESIM PROFILE SELECTION**

(71) Applicant: THALES DIS FRANCE SAS, 92190 Meudon (FR)
(72) Inventor: SCHIRAR, Stéphane, 13720 LA BOUILLADISSE (FR); PHAN, Ly Thanh, 92350 LE PLESSIS ROBINSON (FR)
(74) Representative: Lotaut, Yacine Diaw

(57) **Abstract**

A method (600) to select a profile in a UE in operation. The UE collaborates with an eSIM (104) to support multiple profiles. A plurality of supported profiles are stored in the eSIM. Each supported profile is set with a profile description. The method (600) comprises obtaining description of context from Large Language Model (LLM). Further, the method (600) comprises embedding profile descriptions of supported profiles. The context description, the usage preferences, to produce vectors for each, with real number coordinates. The method (600) further includes selecting from plurality of supported profiles, first set of supported profiles which yield maximum value of similarity function of embedded profile description and of embedded context description. Further, the method (600) comprises selecting from first set of supported profiles, second set of supported profiles which yield maximum value of similarity function of embedded profile description and of embedded usage preferences.

## Description

### FIELD OF USE

The present disclosure relates to a field of public cellular mobile communications compliant with 3GPP standards. The disclosure pertains more specifically to a User Equipment supporting multiple profiles.

### BACKGROUND

Users of public cellular mobile communications services are set with a User Equipment which consists in a device (or terminal) including a Subscriber Identification Module (SIM). The User Equipment is said to collaborate with the SIM. The SIM contains a profile that is a set of data identifying the Home Public Land Mobile Network (HPLMN) to which the subscriber has subscribed and the technical features of her/his subscription such as the frequency band to be used, the type of services the subscriber can afford, the airtime the subscriber can afford, etc.

The SIM may be in the form of a smart card, i.e., a chip in a plastic card, that can be inserted in or alternatively removed from the device ; it can be an embedded SIM (eSIM), a chip in the device, having essentially SIM functionality but that must be configured; or it can be integrated in a chip by the Original Equipment Manufacturer in the form of an eSIM.

When referring to any kind of SIM irrespective of the form factor, the acronym eSIM is used. It is worth that the user to benefit from multiple profiles and choose a profile depending on what the user wants to make of its User Equipment; for example, a profile for professional use and a profile for personal use.

At first, devices with Dual SIM were introduced. Dual SIM means that the device may include two SIM cards and is set with two racks, one for each SIM card. Then came eSIMs that support multiple profiles on one chip, at least as an option. The multiple profiles are in general downloaded by the User Equipment from the SIM provisioning servers of some PLMNs. The User Equipment stores the profiles in a library and together with its eSIM, they can switch at any time to any profile in the library and enable the new profile. The capability to support multiple profiles has been extended to SIM that can be inserted on SIM cards (and the devices in which they are inserted). The specification of a SIM that can be inserted on a SIM card capable of supporting multiple profiles has been addressed by ETSI standardization body in the standardization framework on Secure Element (ETSI Technical Committee Secure Element Technologies, SET) in Technical Specification 102 221 V18.2.0. Under this framework, a SIM is essentially of the USIM type, and a profile appears as a Logical Secure Element.

A person using a User Equipment with multiple profiles must tune the User Equipment to specify which profile s/he wants to use for the wanted service at the present time. For example, when s/he places a call, a menu with a checkbox for each profile pops up on the screen. The person must then tick the check box that s/he considers to be the best suited to telephony in the place where s/he is.

With the emergence of 6G, the variety and number of infrastructure and access networks that a User Equipment compatible with 6G will be capable of handling, the number of profiles supported by a User Equipment is expected to explode. There is a need to implement in User Equipment's (UE) mechanisms to help users in managing their profiles.

### SUMMARY

The following embodiments presents a simplified summary in order to provide a basic understanding of some aspects of the disclosure. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a method to select a profile in a User Equipment (UE) in operation. The UE collaborates with an eSIM. The UE and the eSIM are capable of supporting multiple profiles. A plurality of supported profiles are stored in the eSIM. Each supported profile is set with a profile description. The UE is set with usage preferences for the supported profiles in the form of a text. The operation of the UE takes place in a context comprising the steps of, to be performed at the level of the UE and/or at the level of the server, such as by a profile selection server or by the eSIM. The method comprises obtaining a description of the context from a Large Language Model (LLM) engine, which may be located remotely and/or at the UE level. The method further comprises embedding the profile descriptions of the supported profiles, the context description, the usage preferences, to produce vectors for each, with real number coordinates. The method further comprises selecting from the plurality of supported profiles, a first set of supported profiles which yield the maximum value of a similarity function of the embedded profile description and of the embedded context description. Further, the method comprises selecting from the first set of supported profiles, a second set of supported profiles which yield the maximum value of the similarity function of the embedded profile description and of the embedded usage preferences.

According to some example embodiments, if the second set of supported profiles comprises more than one supported profile, selecting one supported profile at random from the second set of supported profiles to be enabled.

According to some example embodiments, if the communication services subscribed under the selected supported profile are not available to the UE, the UE selects the next profile yielding the maximum of the similarity function after the selected profile in the second set of supported profiles.

According to some example embodiments, the similarity function is a cosine.

According to some example embodiments, the similarity function is a dot product function.

According to some example embodiments, the method further comprises measuring the time elapsed since the latest update of the profile. Further, the method comprises upon the time is elapsed, reaching a given threshold. The method further comprises selecting a new profile.

According to some example embodiments, the method further comprises updating, the context, usage preferences, and significant change of location of the UE. Further, the method comprises transiting from the public network to a first private network, a second private network to the public network. The changes in the network comprises radio signal strength. Further, the method comprises selecting a new profile.

According to some example embodiments, the profile selection server is managed by the Original Equipment Manufacturer of the User Equipment.

Some example embodiments disclosed herein provide a User Equipment configured to run a method to select a profile in the UE in operation. The UE collaborates with an eSIM. The UE and the eSIM together are capable of supporting multiple profiles. A plurality of supported profiles are stored in the eSIM. Each supported profile is set with a profile description. The UE is set with usage preferences for the supported profiles in the form of a text. The operation of the UE takes place in a context, comprising the steps of, to be all performed either by the UE, by a profile selection server or by the eSIM. The method comprises obtaining a description of the context from a Large Language Model (LLM) engine. The method further comprises embedding the profile descriptions of the supported profiles, the context description, the usage preferences, to produce vectors for each, with real number coordinates. The method further comprises selecting from the plurality of supported profiles, a first set of supported profiles which yield the maximum value of a similarity function of the embedded profile description and of the embedded context description. Further, the method comprises selecting from the first set of supported profiles, a second set of supported profiles which yield the maximum value of the similarity function of the embedded profile description and of the embedded usage preferences.

According to some example embodiments, the UE is configured to run the method comprising configuring a LLM assistant capable of requesting a remote LLM engine for a description of the context.

According to some example embodiments, the UE is configured to run the method comprising configuring a user to enable to choose the size of a token to be used for embeddings.

According to some example embodiments, the UE is configured to run the method comprising configuring the user to enable to map the supported profiles to own usage preferences.

According to some example embodiments, the eSIM is a USIM provided with Logical Secure Elements. Each of the supported profiles is programed in a respective Logical Secure Element.

### DEFINITIONS

The term "Embedded Subscriber Identity Module (eSIM)" as used herein in the specification may refer to a digital SIM card that is embedded directly into a device, such as a smartphone, tablet, smartwatch, or IoT device. Unlike traditional physical SIM cards, which are removable and require manual insertion, an eSIM is a programmable component that is soldered into the device's hardware during manufacturing.

The term "Home Public Land Mobile Network (HPLMN)" as used herein in the specification may refer to a primary mobile network operator with which a user's mobile subscription is associated. The HPLMN is used to distinguish the user's "home" network from other networks, such as visited or roaming networks. The HPLMN is the network identified by the Mobile Country Code (MCC) and Mobile Network Code (MNC) stored on the SIM card or eSIM profile of the user.

The term "selection algorithm" as used herein in the specification may refer to a computational process responsible for choosing the most appropriate USIM profile from a set of available profiles, based on a variety of factors such as current usage context, user preferences, profile descriptions, and network conditions. The selection algorithm is central to enable automatic semantic-based profile selection for mobile devices, particularly in the context of eSIM technology.

The term "similarity function" as used herein in the specification may refer to a mathematical or computational method used to assess how similar or relevant two sets of data are to each other. Specifically, the similarity function measures the degree of similarity between embedding vectors that represent different pieces of information, such as user preferences, current usage context, and profile descriptions.

The term "cosine similarity function" as used herein in the specification may refer to a measure used to compute the similarity between two non-zero vectors in an inner product space, often used in machine learning and natural language processing (NLP). The cosine similarity function quantifies the cosine of the angle between two vectors in a multidimensional space and is particularly useful for measuring the similarity in terms of the direction or orientation of the vectors, not their magnitude.

The term "dot product similarity function" as used herein in the specification may refer to a mathematical operation used to measure the similarity between two vectors in a high-dimensional space. The dot product similarity function is widely used in machine learning, information retrieval, and natural language processing (NLP) to assess how similar two items are based on their vector representations. The dot product similarity function is used to compare profile descriptions, user preferences, and current usage contexts to determine the best profile for activation.

The term "Large Language Model (LLM)" as used herein in the specification may refer to a type of artificial intelligence (AI) model that has been trained on vast amounts of text data to understand and generate human-like language. The LLMs use deep learning techniques, particularly neural networks, to process and analyze text, enabling them to perform a wide variety of natural language processing (NLP) tasks, such as text generation, translation, summarization, sentiment analysis, and question-answering.

### BRIEF DESCRIPTION OF THE DRAWINGS

The above and still further example embodiments of the present disclosure will become apparent upon consideration of the following detailed description of embodiments thereof, especially when taken in conjunction with the accompanying drawings.
FIG. 1 illustrates a block diagram of an exemplary system to select a profile in a User Equipment (UE) in operation, in accordance with an exemplary embodiment.
FIG. 2 illustrates a flow diagram of an exemplary method to select the profile in the UE in operation, in accordance with an exemplary embodiment.
FIGs. 3A and 3B illustrate a flow diagram of an exemplary method to select the profile in the UE in operation, in accordance with an exemplary embodiment.
FIG. 4 illustrates a flow diagram of an exemplary method to select the profile in the UE in operation, in accordance with an exemplary embodiment.
FIG. 5 illustrates a flow diagram of an exemplary method to select the profile in the UE in operation, in accordance with an exemplary embodiment.
FIG. 6 illustrates a process of a method to select the profile in the UE in operation, in accordance with an exemplary embodiment.
FIG. 7 illustrates an exemplary computing system for implementation of a method to select the profile in the UE in operation, in accordance with an exemplary embodiment.

The figures illustrate embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

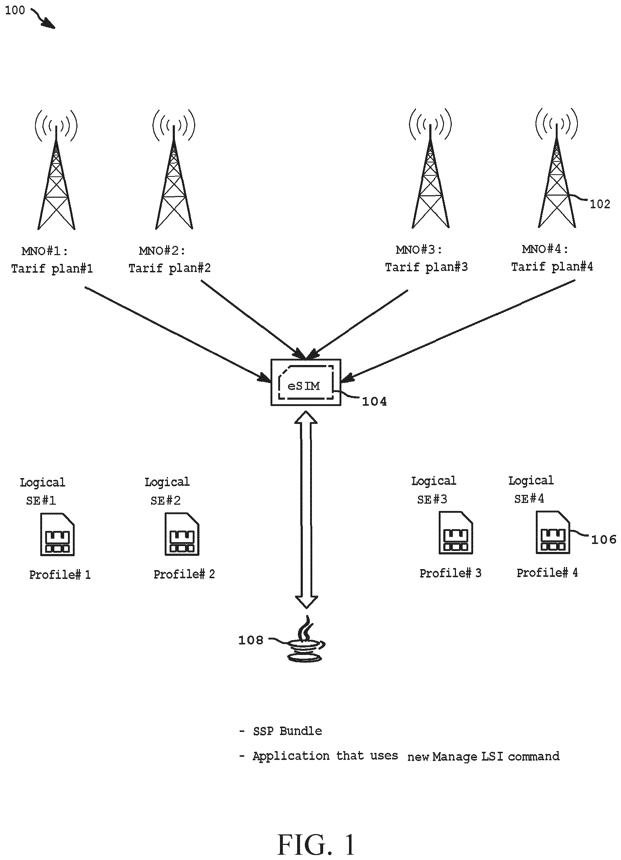

Referring now to Fig. 1, a block diagram of an exemplary system to select a profile in a User Equipment (UE) in operation is illustrated, in accordance with an exemplary embodiment. The system 100 comprises a plurality of network operators 102, an Embedded Subscriber Identity Module (eSIM) 104, a plurality of profiles 106, and a profile management system 108. The eSIM 104 is capable of maintaining the plurality of profiles 106 across the plurality of network operators 102.

In an embodiment, the plurality of network operators 102 may be organizations that provide wireless communication services. The plurality of network operators 102 own and operate the infrastructure necessary to offer connectivity services to users, comprising voice, data, and messaging over cellular networks. With 5G and 6G technologies, the plurality of network operators 102 may provide network slices tailored for specific use cases like low-latency gaming, enterprise private networks, or enhanced mobile broadband, ensuring Quality of Service (QoS) by prioritizing traffic based on service-level agreements.

Further, the eSIM 104 may be an embedded chip soldered into devices, enabling users to connect to networks operators 102 without the need to swap physical SIM cards. The eSIM 104 is standardized by the Global System for Mobile Communications Association (GSMA) and are increasingly used in smartphones, IoT devices, wearables, and other connected devices. The eSIM 104 allow users to download and activate multiple carrier profiles remotely through a process called Remote SIM Provisioning. The users may switch carriers, add new subscriptions, or activate plans without needing a physical SIM. In an embodiment, the eSIM 104 may store multiple profiles, each corresponding to a unique mobile network subscription. Further, the eSIM 104 ensures strong encryption and tamper-resistance to protect user data and prevent unauthorized access. The eSIM 104 may act as a unified management hub. The eSIM 104 integrates with multiple LSIs, each associated with distinct subscriptions or use cases. Further, the eSIM 104 utilizes Logical Secure Element (LSE) functionality, as defined by ETSI standards, to handle multiple active profiles simultaneously.

In an embodiment, the plurality of profiles 106 communicates bi-directionally with the eSIM 104, allowing real-time updates and context-aware switching. Each of the plurality of profiles 106 may correspond to a unique subscription with specific use cases such as enterprise slice, streaming services, etc. The plurality of profiles 106 may be enabled by the plurality of network operators 102. The user may purchase or borrow the profile 106 from the network operator 102.

In an embodiment, the profile management system 108 may interact with the eSIM 104 to manage profile configurations, embeddings, and semantic matching. The profile management system 108 may perform automatic, semantic-based profile selection by processing metadata, user preferences, and current usage context. In some embodiments, the profile management system 108 may implement a Large Language Model (LLM) to generate description of the context of the plurality of the profiles 106.

In an embodiment, Large Language Models (LLMs) represent a transformative class of artificial intelligence systems designed to process, understand, and generate human-like text. Built on advanced deep learning architectures, LLMs are trained on vast datasets comprising diverse forms of textual information, such as books, articles, and web pages. By leveraging billions or even trillions of parameters, these models are capable of understanding complex linguistic patterns, contextual nuances, and semantic relationships within the text. In the context of the present disclosure, LLMs play a pivotal role in enhancing the dynamic management of eSIM profiles and network selection by incorporating semantic reasoning, context-aware decision-making, and predictive analytics. The capabilities of LLMs are harnessed to introduce a level of intelligence that enables devices to interact more effectively with their environment, optimize resource utilization, and provide a seamless user experience.

The present disclosure employs LLMs to analyze contextual information such as user preferences, location data, application usage patterns, and network performance metrics. By processing the data, the LLM generates insights that drive automated eSIM profile switching, ensuring that the active profile aligns with the user's current needs. For example, when a user is traveling internationally, the system can predict the most cost-effective and high-performance network based on historical trends and local carrier options. Further, LLMs are adept at semantic analysis, enabling them to process textual and structured data related to carrier terms, conditions, and service-level agreements, allowing the system 100 to evaluate and compare network operators based on quality-of-service guarantees, pricing, and other parameters. By incorporating the semantic understanding, the present disclosure ensures that users are always connected to the most suitable network without manual intervention.

By leveraging historical data and real-time inputs, the LLM may predict future connectivity requirements and network behavior. The predictive capabilities help in proactively managing network transitions, reducing latency, and avoiding disruptions. For example, the LLM model may anticipate peak data usage times or regions with network congestion and adjust profiles accordingly. Further, the present disclosure integrates LLM-driven personalization by analyzing user interaction patterns and preferences, enabling the system 100 to recommend specific network plans, prioritize profiles, and even negotiate with carriers on behalf of users for better terms. The automation of the processes reduces the complexity for end-users and ensures a hassle-free experience.

In accordance with the present disclosure, LLMs facilitate intelligent switching between multiple eSIM profiles by analyzing both structured data such as network parameters and unstructured such as user feedback. The integration of LLMs ensures that profile switching happens seamlessly, guided by real-time insights and predictive reasoning. The system 100 utilizes LLMs to continuously evaluate available network operators based on key performance indicators such as signal strength, data speed, and cost. By processing vast amounts of real-time and historical data, the present disclosure ensures that the selected network operator offers the best possible service for the user's context. Further, the LLM enable natural language interfaces, allowing users to interact with the system 100 using conversational queries or commands. For example, a user may ask, "Which network is best for streaming video here?" or "Switch to the cheapest roaming plan," and the system 100 may process the request and execute it autonomously. There are a number of LLM available to the public today, for example OpenAI's GPT series of models such as GPT-3.5, GPT-4 and GPT-4o; used in ChatGPT, Google's Gemini used in the chatbot of the same name, Meta's LLaMA family of models, Mistral AI's models.

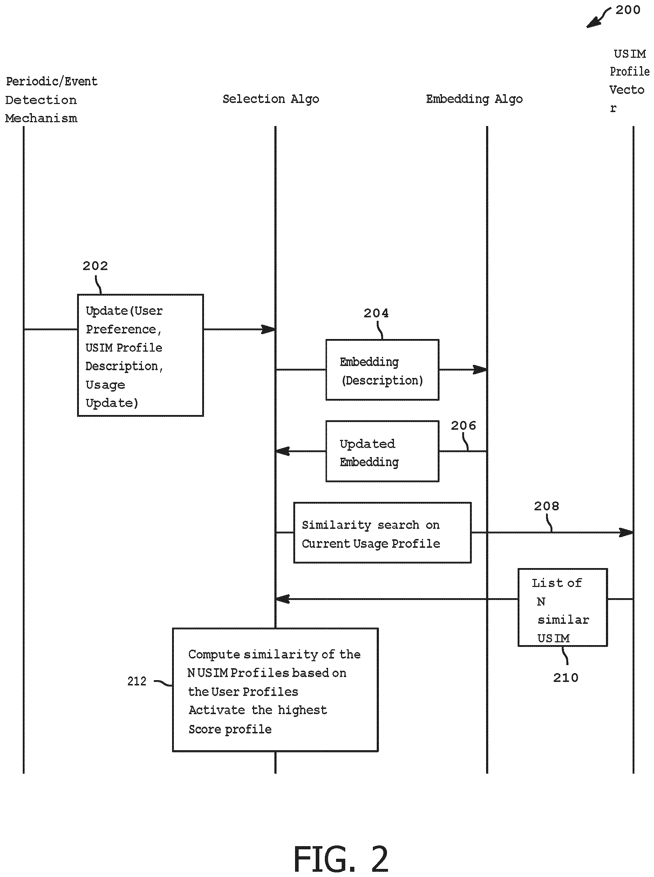

Referring now to Fig. 2, a flow diagram of an exemplary method 200 to select the profile in the UE in operation is illustrated, in accordance with an exemplary embodiment. The method 200 may be implemented by any one of the UE, a profile selection server and the eSIM 104. At step 202, a user preference, a Universal Subscriber Identity Module (USIM) Profile description, an usage update is updated. The user preference may be a configured preference for when and how specific profiles or groups of profiles should be used. Further, the eSIM profile may be a predefined descriptions of profiles such as "Best for Netflix" or "Best for business travel". The usage context update may reflect the current context of the UE such as active applications, time, location.

At step 204, a profile description is embedded. In an embodiment, each USIM profile description is transformed into a machine-readable embedding using a vector representation. The process encodes the semantic meaning of the text-based descriptions. Textual descriptions are written in natural language, which computers may not directly process for tasks like comparison or similarity searches. Therefore, the description need to be transformed into a format that algorithms may interpret and analyze effectively. In some embodiments, the text descriptions are passed through an embedding algorithm that converts them into numerical vectors. The numerical vectors are essentially arrays of numbers that represent the semantic information of the text. The vector representation captures relationships and meanings inherent in the text. For example, the embeddings for "Netflix" and "YouTube" profiles may be closer together in vector space because they relate to similar types of content usage.

At step 206, an updated embeddings are generated based on a change in the user preferences, profile descriptions, or usage context. In an embodiment, the system 100 operates dynamically, meaning it continuously adapts to changes in user settings, environmental conditions, or profile details. For example, the user modifies preferences like, "Prioritize profiles for video streaming when at home" or "Use low-cost profiles during international travel" that may require updating the vector that represents user preferences to reflect the new configuration.

At step 208, a similarity search is performed on the Current Usage Profile. In an embodiment, the system 100 may perform a similarity search using embeddings to compare the current usage context with the stored embeddings of USIM profiles. The similarity search is performed to determine which stored USIM profiles are most relevant to the current usage context by comparing the embeddings, ensuring optimal selection of profile dynamically, without manual intervention. The similarity algorithm is used to measure the degree of closeness between the current usage profile embedding and each stored USIM profile embedding. The similarity algorithm may be a cosine similarity, which calculates the cosine of the angle between two vectors. The closer the value is to 1, the more similar the profiles are. Based on the similarity scores, the system 100 ranks the USIM profiles from most to least relevant.

At step 210, a list of similar profiles is transmitted to the selection algorithm. The list of similar profiles is a ranked list of N profiles most relevant to the current usage scenario. The list of similar profiles serves as an intermediary step in the process of automatic profile selection, narrowing down the available profiles to those most suited to the immediate requirements of the user and device. The higher profiles in the list of similar profiles corresponds to a higher similarity score.

At step 212, similarity scores between the list of selected profiles and the user preferences embedding is calculated. Further, the profile with the highest similarity score is automatically activated, ensuring it aligns with the user's preferences and the current context. In an embodiment, the system 100 identifies the profile with the highest similarity score as the best match, for example best satisfy the user's preferences such as cost, quality of service, or application-specific requirements, and fit the current usage context such as active applications, time, and location. Once the best-matching profile is identified, the profile is automatically activated in the UE, ensuring the UE switches to a profile that is most relevant to the user's immediate needs and preferences without manual intervention.

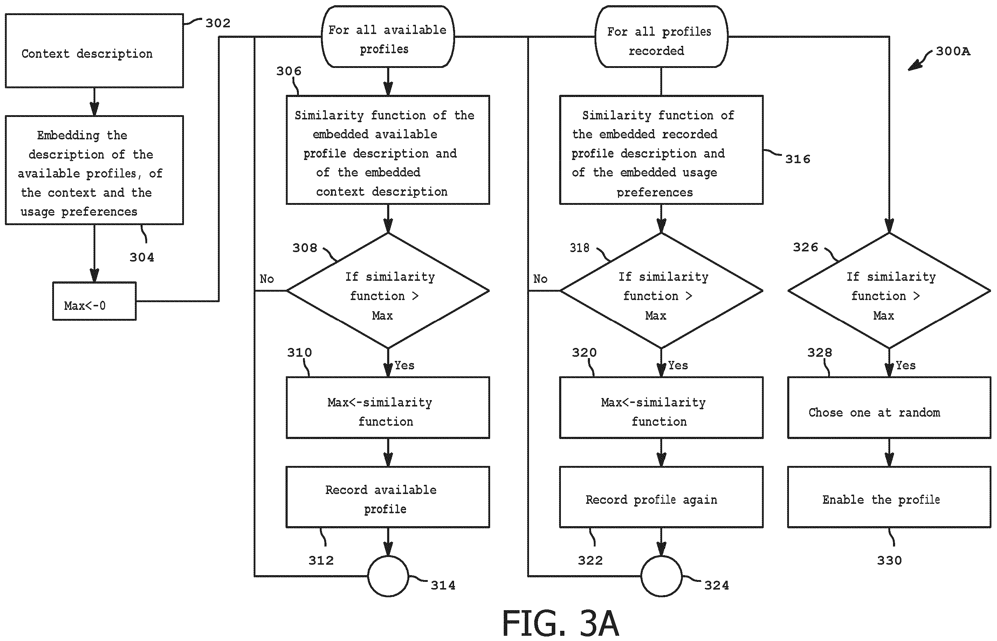

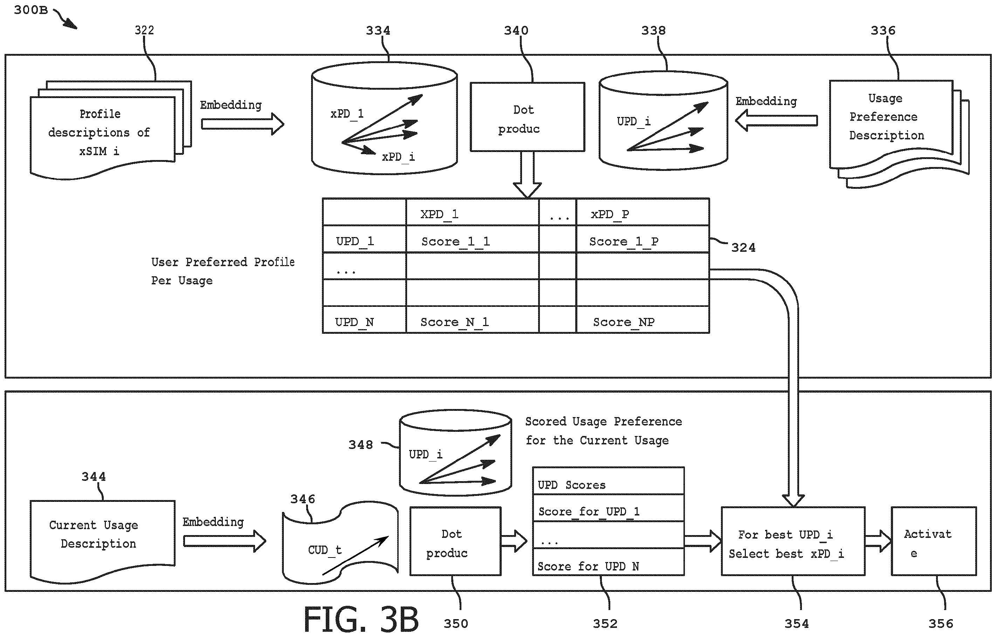

Referring now to Figs. 3A and 3B, an exemplary flow chart of a method 300A and 300B to select a profile in a UE in operation is illustrated, in accordance with an example embodiment. It will be understood that each block of the flow diagram of the method 300A and 300B may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the processing engine, employing an embodiment of the present disclosure and executed by the processor. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

Referring now to Fig. 3A, a flow diagram of an exemplary method 300A to select the profile in the UE in operation is illustrated, in accordance with an exemplary embodiment. The method 300A may be implemented by any one of the UE, a profile selection server and the eSIM 104. At step 302, a context description is received. The context description provides detailed information about the current usage context of the UE. The context description is critical for dynamically adapting the USIM profile selection process based on real-time usage conditions. In an embodiment, the context description may be generated by the LLM model a textual description of the current usage scenario based on the collected parameters. The LLM model may be located at the level of the UE and/or a server, such that it may be "local" and/or "remote."

At step 304, the description of the available profiles, context description, and usage preferences is embedded. Further, embedding transforms textual descriptions such as profile descriptions, user preferences, and context information into vector representations that capture the semantic meaning, enabling the system 100 to use mathematical and computational techniques, such as similarity searches, to compare and match these embeddings effectively. In an embodiment, a machine learning model, likely an LLM, to process and encode the textual descriptions into high-dimensional vectors. Further, each vector represents the underlying meaning and contextual relationship of the text data, enabling the system to understand similarities between descriptions, context, and preferences.

For all the available profiles, at step 306, a similarity function of the embedded available profile description and the embedded context description. The system 100 uses a similarity function, such as the dot product similarity function or the cosine similarity function, to compute how closely the embedded vector of the profile description matches the vector of the current context description.

At step 308, determining whether the similarity function is greater than a predefined threshold. The predefined threshold is set as the benchmark to decide whether a profile is relevant to the current context. The predefined threshold ensures that only profiles with a high similarity to the current usage or user preferences are considered. In an embodiment, if the similarity score between the current usage vector and a profile description vector exceeds the threshold, the profile is deemed suitable for activation. The similarity function ensures a balance between accuracy and efficiency. By filtering profiles based on a threshold, the algorithm narrows down the options to those most relevant, improving the user's experience without overwhelming them with irrelevant choices. At step 310, the profiles with high similarity function are arranged in a descending order.

At step 312, the profiles are grouped together into a first set of supported profiles which yield the maximum value of a similarity function of the embedded profile description and of the embedded context description. The grouping is driven by the similarity function that evaluates how well the embedded profile descriptions align with the embedded context descriptions, ensuring that the subsequent profile activation process only considers the profiles most suitable for the user's current scenario. In simpler words, the similarity function is applied to all available profiles to compute the similarity scores relative to the current context. Further, the profiles yielding the maximum similarity scores are grouped into the first set of supported profiles. As the context description changes such as the user launches a new application, changes location, or switches networks, the similarity scores are recalculated. At step 314, the first set of profiles are recorded for further processing.

For all recorded profiles, at step 316, a similarity function of the embedded profile description and of the embedded usage preferences. The system 100 uses a similarity function, such as the dot product similarity function or the cosine similarity function, to compute how closely the embedded vector of the profile description matches the vector of the embedded usage preferences.

At step 318, determining whether the similarity function of the embedded profile description and of the embedded usage preferences is greater than a predefined threshold. The predefined threshold is set as the benchmark to decide whether a profile is relevant to the usage preference. The predefined threshold ensures that only profiles with a high similarity to the profile description or user preferences are considered. In an embodiment, if the similarity score between the profile description and a usage preference exceeds the threshold, the profile is deemed suitable for activation. The similarity function ensures a balance between accuracy and efficiency. By filtering profiles based on a threshold, the algorithm narrows down the options to those most relevant, improving the user's experience without overwhelming them with irrelevant choices. At step 320, the profile description with high similarity function are arranged in a descending order.

At step 322, the first set of profiles are grouped together into a second set of profiles which yield the maximum value of a similarity function of the embedded profile description and of the embedded usage preferences. The grouping is based on the similarity function, which evaluates the relationship between the embedded profile descriptions and the embedded usage preferences, achieving a more precise selection by focusing on the profiles with the highest similarity scores. In simpler words, the profiles that yield the highest similarity scores between their embedded profile descriptions and the embedded usage preferences are grouped into a second set of profiles. This refinement ensures a highly targeted selection of profiles, tailored to the user's current context, improving the system's relevance, efficiency, and responsiveness. At step 324, the second set of profiles are recorded for further processing. The profile with the highest similarity function in the second set of profile is selected for the user to be enabled.

At step 326, determining whether several profiles are recorded highest in the second set of profiles. At step 328, any one of the profile is chosen at random for the user. At step 330, the chosen profile is enabled on the eSIM 104 of the user.

Fig. 3B depicts a flow diagram of an exemplary method 300B to select the profile in the UE in operation, in accordance with an exemplary embodiment. The method 300B may be implemented by any one of the UE, a profile selection server and the eSIM 104 via a selection algorithm. At step 332, the profile description (xPD) of the plurality of profiles (xSIM _i) is received. In an embodiment, the UE may support multiple profiles (xSIM_i) such as USIM profiles for telecommunication networks or usage profiles for applications. Each profile serves a distinct purpose and is optimized for specific conditions such as work, gaming, and high-bandwidth activities.

At step 334, the profile description (xPD) of the plurality of profiles (xSIM_i) are converted into high-dimensional vector embeddings (xPD i) of the profile description (xPD) using a text-to-vector embedding algorithm, such as "all-MiniLM-L6-v2". The embeddings (xPD i) of the profile description (xPD) are normalized so that the norm is equal to 1, ensuring consistency in similarity computations. In an embodiment, the selection algorithm processes the received profile descriptions (xPD) from the step 332 and transforms into high-dimensional vector embeddings(xPD i). The embeddings are mathematical representations of the textual descriptions, which enable efficient and meaningful similarity computations.

At step 336, a usage preference description (UPD) of the plurality of profiles (xSIM_i) is received. In an embodiment, The usage preference description (UPD) provide a way for users to prioritize specific profiles based on their needs and preferences for different usage scenarios.

At step 338, the usage preference description (UPD) of the plurality of profiles (xSIM_i) are converted into high-dimensional vector embeddings (UPD_i) of the usage preference description (UPD) using the text-to-vector embedding algorithm, such as the "all-MiniLM-L6-v2". The high-dimensional vector embeddings (UPD_i) of the usage preference description (UPD) is achieved by mapping the textual descriptions into high-dimensional vector spaces. The vector space place similar textual meanings result in closer points, while dissimilar meanings are farther apart.

At step 340, a dot product is computed between the high-dimensional vector embeddings (xPD i) of the profile description (xPD) and the high-dimensional vector embeddings (UPD_i) of the usage preference description (UPD) to generate a similarity score of each of the profile (xSIM). Each dimension of the vectors contributes to the overall similarity score, essential to measure alignment between the profile description (xPD) and the user preference (UPD). In an embodiment, the similarity score aligns user preferences with the available profiles, forming the basis for selecting the most suitable profile.

At step 342, the similarity score are stored in a list. The similarity score results in a scoring matrix, where each score represents how well a profile aligns with a specific user preference (Score_i_j = xPD_i ° UPD_j)_{.} The Score_i_j is the similarity score. In an embodiment, the similarity score are organized in a scoring matrix. Each row of the scoring matrix represents a specific user preference (UPD_j), each column of the scoring matrix represents the profile description (xPD_i), and each cell comprises a similarity score (Score_i_j).

At step 344, the current usage description (CUD) of the plurality of profiles (xSIM_i) is received. In an embodiment, the current usage description (CUD) is a dynamic representation of the device's current operating context comprising active applications such as video streaming, calls, browsing or services, device settings such as power-saving mode, data usage priorities, and external factors such as geographic location, time of day, network availability.

At step 346, the current usage description (CUD) of the plurality of profiles (xSIM_i) are converted into high-dimensional vector embeddings (CPD_i) of the current usage description (CUD) using the text-to-vector embedding algorithm, such as the "all-MiniLM-L6-v2". The high-dimensional vector embeddings (CPD_i) of the current usage description (CUD) is achieved by mapping the textual descriptions into high-dimensional vector spaces. The vector space place similar textual meanings result in closer points, while dissimilar meanings are farther apart.

At step 348, the high-dimensional vector embeddings (CPD_i) of the current usage description (CUD) are received from the step 338. At step 350, a dot product is computed between the high-dimensional vector embeddings (CPD_i) of the current usage description (CUD) and the high-dimensional vector embeddings (UPD_i) of the usage preference description (UPD) to generate a similarity score of each of the profile (xSIM). Each dimension of the vectors contributes to the overall similarity score, essential to measure alignment between the profile description (xPD) and the current usage description (CUD). In an embodiment, the similarity score aligns usage description with the available profiles, forming the basis for selecting the most suitable profile.

At step 352, the similarity score are stored in the list. The similarity score results in a scoring list, where each score represents how well a profile aligns with a current user description (UPD_score_j = UDP_j ° CUD_t). The UPD_score_j is the similarity score. Each of the row of the scoring list comprises the similarity scores (UPD _score j) in an ascending order, ensuring most relevant profiles are listed above in the scoring list and the low similarity score (UPD_score_j) are listed below of the scoring list.

At step 354, the best profiles from the scoring matrix and the scoring list are selected. The top profiles from the similarity score (Score_i_j) and the similarity score (UPD_score_j) are selected, as they are most relevant to the parameters such as user preference, profiles description, etc. At step 356, at least one profile from the best profiles is activated on the eSIM 104 of the UE. The UE may input a preference to select any one of the profile from the best profiles.

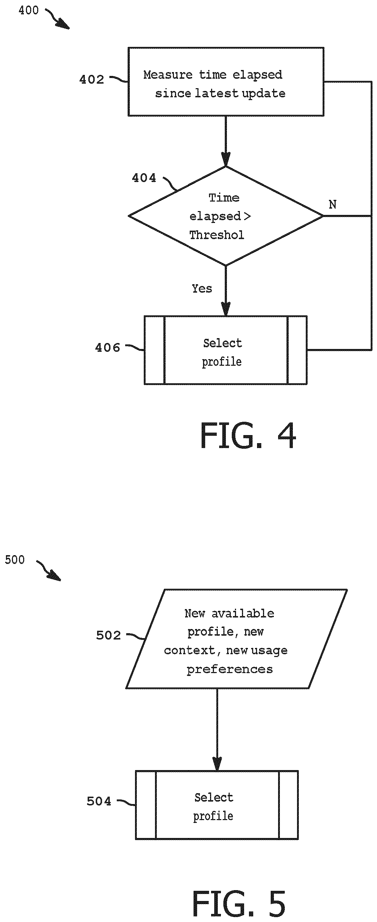

Referring now to Fig. 4, an exemplary flow chart of a method 400 to select a profile in a UE in operation is illustrated, in accordance with an example embodiment. It will be understood that each block of the flow diagram of the method 400 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the processing engine, employing an embodiment of the present disclosure and executed by the processor 104. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

Referring now to Fig. 4, a flow diagram of an exemplary method 400 to select the profile in the UE in operation is illustrated, in accordance with an exemplary embodiment. The method 400 may be implemented by any one of the UE, a profile selection server and the eSIM 104. At step 402, time elapsed since the latest update of the profile is measured. The time elapse is measured to determine how much time has passed since a specific profile was last updated. The measurement ensures that the profile's information such as subscription details, usage preferences, or contextual metadata is still relevant and up to date for accurate decision-making in the profile selection process. In an embodiment, each profile is associated with a timestamp indicating the last time it was updated such as subscription changes, metadata refresh, or preference adjustments.

At step 404, determining whether the time elapsed is greater than a predefined threshold. If the elapsed time is within the threshold, the profile is considered valid and may proceed in the selection process. In simpler words, the time lapsed ensures that the system 100 operates with the most recent and relevant data, improving both the reliability and efficiency of the automated profile selection process. If the time elapsed exceeds the threshold, at step 406, the profile is selected for the selection process.

Referring now to Fig. 5, an exemplary flow chart of a method 500 to select a profile in a UE in operation is illustrated, in accordance with an example embodiment. It will be understood that each block of the flow diagram of the method 500 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the processing engine, employing an embodiment of the present disclosure and executed by the processor. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 5 is explained in conjunction with elements from Figs. 1, 2, 3, and 4. If the profiles are updated with the new context description, new usage preferences, and new profile descriptions of the supported profiles. At step 502, an updated first set of the profiles and an updated second set of profiles are generated dynamically. In an embodiment, the updated context description, usage preferences, and profile descriptions are converted into high-dimensional embedding vectors using a similarity algorithm such as cosine similarity. The similarity algorithms dynamically integrates the new embeddings and reevaluates all profiles to reflect real-time changes, ensuring the generated profile sets are always relevant to the current situation and user requirements. At step 504, the updated first set of profile and the updated second set of profile are selected for the selection process as described in detail in the present disclosure.

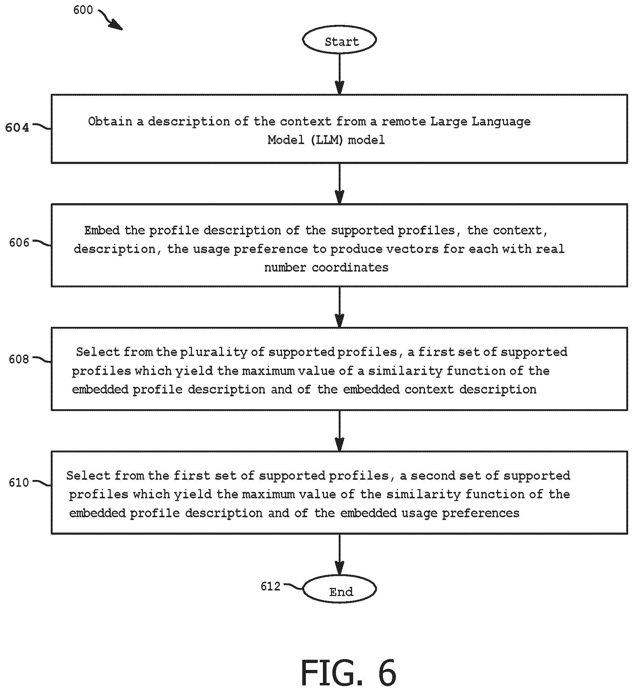

FIG. 6 illustrates an exemplary flow chart of a method 600 to select a profile in a UE in operation, in accordance with an example embodiment. It will be understood that each block of the flow diagram of the method 600 may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory of the processing engine, employing an embodiment of the present disclosure and executed by the processor. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 6 is explained in conjunction with elements from Figs. 1, 2, 3, 4, and 5. At step 602, the method 600 is initiated. The method 600, at step 604 may include obtaining a description of the context from a remote Large Language Model (LLM). In an embodiment, the description of the context refers to a textual representation of the current state of the user's environment and device usage such as active applications, device location, time of day or day of the month, user activity or behavior. The description of the context is essential for matching the current usage scenario with stored user preferences and profile descriptions during USIM profile selection. The collected data is structured into a query or prompt format that is understandable by the LLM. Further, the LLM hosted remotely, analyzes the input data. The LLM generates a textual summary or description of the current context.

The method 600, at step 606 may include embedding the profile descriptions of the supported profiles, the context description, the usage preferences, to produce vectors for each, with real number coordinates. In an embodiment, the unstructured textual data such as profile descriptions, context descriptions, and user preferences into structured, machine-readable vector representations. The vector representation allow the system 100 to perform mathematical operations, such as similarity searches, enabling automatic and intelligent selection of the most appropriate USIM profile. In an embodiment, the profile descriptions comprises textual data describing the optimal use cases for the available profiles such as "Best used for business roaming" or "Optimized for streaming Netflix". Further, the context description refers to real-time information about the current usage environment of the UE, for example Active applications such as Netflix, a web browser; location and time such as Morning in New York; and Network parameters or active services such as 5G network slice for streaming. The usage preferences comprises configurable user-defined rules specifying when and how specific profiles should be used such as "Use Profile A for international roaming in Europe". The usage preferences are also embedded into vector forms to enable direct comparison with the profile and context embeddings. In an embodiment, the embedding process uses Natural Language Processing (NLP) and machine learning models, likely similar to pre-trained language models such as word embeddings or sentence embeddings. The models transforms the textual data into high-dimensional vectors. Each vector has real-number coordinates, which mathematically represent the meaning and relationships in the text for example, vectors that represent similar profiles or contexts may have closer distances such as cosine similarity and dot product similarity.

Sentence embeddings are numerical representations of entire sentences, capturing their semantic meaning in vector form. These embeddings allow machines to understand and process the meaning of sentences in a way that is similar to human comprehension. By transforming sentences into vectors, sentence embeddings enable various natural language processing tasks, such as sentiment analysis, sentence similarity, and text classification. Advanced models like BERT and SBERT have been developed to create more accurate and context-aware sentence embeddings. These embeddings are crucial for improving the performance of language models in understanding and generating human-like text.

In an embodiment measurements are translated to text algorithmically. In an example embodiment, radio measures are first digitalized and categorized into for instance 5 categories, depending on their levels: "Category" is one of [Very bad, bad, average, good or very good]. The named categories a then used in template sentences such as "The radio signal is [category] in reception". If the radio signal is categorized based on its level as "bad", then the sentence would be "The radio signal is 'bad' in reception". The sentences for all the measurements are then concatenated into a description of the situation. The situation description can then be embedded, for similarity comparison with the user preferences.

The method 600, at step 608 may include selecting from the plurality of supported profiles, a first set of supported profiles which yield the maximum value of a similarity function of the embedded profile description and of the embedded context description. The similarity function such as the cosine similarity and the dot product similarity is used to compare the profile description vectors against the context description vector. The similarity score indicates how well a particular profile aligns with the current usage context. Further, the Profiles that yield the highest similarity scores are grouped into the first set of supported profiles. The first set of supported profiles represents the best matches for the current usage scenario, ensuring that the selected profiles align closely with user needs and preferences. The similarity-based selection leverages advanced LLM techniques to process complex relationships between profile attributes and usage contexts without requiring manual intervention.

The method 600, at step 610 may include selecting from the first set of supported profiles, a second set of supported profiles which yield the maximum value of the similarity function of the embedded profile description and of the embedded usage preferences. Further, if the second set of supported profiles comprises more than one supported profile, selecting one supported profile at random from the second set of supported profiles to be enabled. In an embodiment, if the communication services subscribed under the selected supported profile are not available to the UE, the UE selects the next profile yielding the maximum of the similarity function after the selected profile in the second set of supported profiles. The second set of supported profiles represents the final profile selection is both contextually relevant and aligned with user-defined preferences, providing a seamless and personalized user experience.

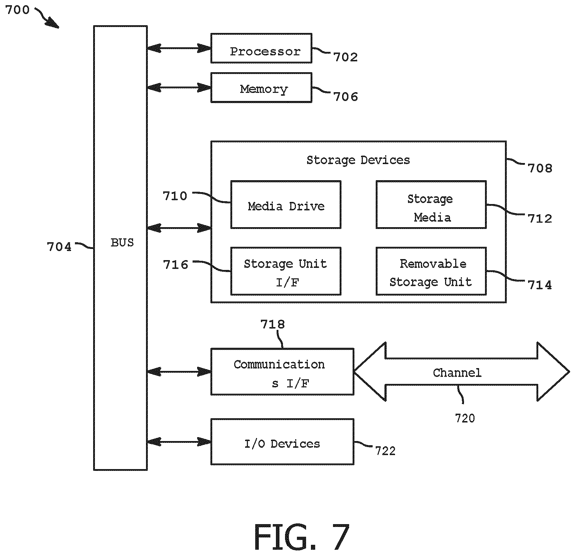

FIG. 7 illustrates an exemplary computing system 700 for implementation of a method to select a profile in a User Equipment (UE) in operation, in accordance with an exemplary embodiment. The computing system 700 may represent, for example, an end device that involves network connection. In an embodiment, the end device may include, but not limited to a smart phone, a laptop computer, a desktop computer, a workstation, a portable computer, a handheld, or a mobile device. In an embodiment, the computing system 700 may represent, for example, an end-device with the provision of mobility. Examples of the end-device with the provision of mobility may include but not limited to a Telematics Control Unit (TCU), an infotainment system, a Vehicle-to-Everything Device (V2X) device, an On-board Diagnostics Device (OBD), an Advanced Driver Assistance Systems (ADAS) sensor, and the like. The computing system 700 may include one or more processors, such as a processor 702 that may be implemented using a general or special purpose processing engine such as, for example, a microprocessor, microcontroller or other control logic. In this example, the processor 702 is connected to a bus 704 or other communication medium. In an embodiment, examples of processor 702 may include, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices, system-on-a-chip processors or other future processors.

The computing system 700 may also include a memory 706 (main memory), for example, Random Access Memory (RAM) or other dynamic memory, for storing information and instructions to be executed by the processor 702. The memory 706 also may be used for storing temporary variables or other intermediate information during execution of instructions to be executed by the processor 702. The computing system 700 may likewise include a read only memory ("ROM") or other static storage device coupled to bus 704 for storing static information and instructions for the processor 702.

The computing system 700 may also include a storage device 708, which may include, for example, a media drive 710 and a removable storage interface 714. The media drive 710 may include a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 712 may include, for example, a hard disk, magnetic tape, flash drive, or other fixed or removable medium that is read by and written to by the media drive 710. As these examples illustrate, the storage media 712 may include a computer-readable storage medium having stored there in particular computer software or data.

In some embodiments, the storage devices may include other similar instrumentalities for allowing computer programs or other instructions or data to be loaded into the computing system 700. Such instrumentalities may include, for example, a removable storage unit 714 and a storage unit interface 716, such as a program cartridge and cartridge interface, a removable memory (for example, a flash memory or other removable memory module) and memory slot, and other removable storage units and interfaces that allow software and data to be transferred from the removable storage unit 714 to the computing system 700.

The computing system 700 may also include a communications interface 718. The communications interface 718 may be used to allow software and data to be transferred between the computing system 700 and external devices. Examples of the communications interface 718 may include a network interface (such as an Ethernet or other NIC card), a communications port (such as for example, a USB port, a micro-USB port), Near field Communication (NFC), etc. Software and data transferred via the communications interface 718 are in the form of signals which may be electronic, electromagnetic, optical, or other signals capable of being received by the communications interface 718. These signals are provided to the communications interface 718 via a channel 720. The channel 720 may carry signals and may be implemented using a wireless medium, wire or cable, fiber optics, or another communications medium. Some examples of the channel 720 may include a phone line, a cellular phone link, an RF link, a Bluetooth link, a network interface, a local or wide area network, and other communications channels.

The computing system 700 may include Input/Output (I/O) devices 722. Examples may include, but are not limited to a display, keypad, microphone, audio speakers, vibrating motor, LED lights, etc. The I/O devices 722 may receive input from a user and also display an output of the computation performed by the processor 702. In this document, the terms "computer program product" and "computer-readable medium" may be used generally to refer to media such as, for example, the memory 706, the storage devices 708, the removable storage unit 714, or signal(s) on the channel 720. These and other forms of computer-readable media may be involved in providing one or more sequences of one or more instructions to the processor 702 for execution. Such instructions, generally referred to as "computer program code" (which may be grouped in the form of computer programs or other groupings), when executed, enable the computing system 700 to perform features or functions of embodiments of the present disclosure.

In an embodiment where the elements are implemented using software, the software may be stored in a computer-readable medium and loaded into the computing system 700 using, for example, the removable storage unit 714, the media drive 710 or the communications interface 718. The control logic (in this example, software instructions or computer program code), when executed by the processor 702, causes the processor 702 to perform the functions of the disclosure as described herein.

As will be appreciated by those skilled in the art, the techniques described in the various embodiments discussed above are not routine, or conventional, or well understood in the art. The techniques discussed above provide for innovative solutions to address the challenges associated with selecting a profile in a User Equipment in operation. The disclosed techniques offer several advantages over the existing methods as listed in below paragraphs.

The present disclosure introduces a method and a system that enable automated, real-time selection of USIM profiles, dynamically adapting to the user's context and preferences without requiring manual intervention.

The present disclosure introduces a method, and a system that ensures selected profiles align closely with the user's real-time environment, such as active applications, location, or time of day, providing a more efficient and personalized experience.

By incorporating user preferences into the selection process, the present disclosure ensures that activated profiles are tailored to the specific needs and priorities of the user, improving satisfaction and usability.

The present disclosure provides a method and a system that supports handling a large number of profiles, making it suitable for advanced telecommunications networks where devices require multiple profiles for varied use cases.

The present disclosure introduces a system and a method that reduces administrative overhead by automating profile activation, minimizing the complexity of managing multiple profiles in dynamic scenarios.

Using advanced vector embedding and similarity functions, the present disclosure ensures precise profile matching, improving the accuracy of the selection process.

By filtering profiles iteratively based on context and preferences, the system ensures efficient computational resource usage while prioritizing the most relevant profiles.

The disclosed techniques offer several applications as listed in the paragraphs below.

The present disclosure introduces a method and a system for seamless profile management in 5G and 6G networks, enabling devices to switch profiles dynamically for improved connectivity and performance.

The method may be applied to IoT devices requiring multiple profiles for different tasks, such as remote monitoring, industrial automation, or home security.

Enterprises may leverage the system to optimize profile usage for employees traveling internationally or using specialized corporate applications.

Operators may use the method to dynamically allocate profiles for efficient bandwidth utilization and cost management, enhancing service delivery.

Vehicles equipped with smart connectivity systems can use the method to manage profiles for navigation, infotainment, and emergency communication.

The present disclosure is applicable in environments requiring multiple network connections, such as hybrid networks combining public and private infrastructure

Many modifications and other embodiments of the disclosures set forth herein will come to mind to one skilled in the art of the present disclosure pertain having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the disclosure is not limited to these embodiments. Many variations, modifications, additions, and improvements to the embodiments described above are possible. It is contemplated that these variations, modifications, additions, and improvements fall within the scope of the disclosure.

## Claims

1. A method to select a profile in a User Equipment (UE) in operation, wherein the UE collaborates with an Embedded Subscriber Identity Module (eSIM) (104), wherein the UE and the eSIM (104) together are capable of supporting multiple profiles, wherein a plurality of supported profiles are stored in the eSIM (104), wherein each supported profile is set with a profile description, wherein the UE is set with usage preferences for the supported profiles in the form of a text, wherein the operation of the UE takes place in a context, comprising the steps of, to be all performed either by the UE, by a profile selection server or by the eSIM(104):
obtaining a description of the context from a remote Large Language Model (LLM);
embedding the profile descriptions of the supported profiles, the context description, the usage preferences, to produce vectors for each, with real number coordinates;
selecting from the plurality of supported profiles, a first set of supported profiles which yield a maximum value of a similarity function of the embedded profile description and of the embedded context description; and
electing from the first set of supported profiles, a second set of supported profiles which yield the maximum value of the similarity function of the embedded profile description and of the embedded usage preferences.

2. The method according to the previous claim, wherein if the second set of supported profiles comprises more than one supported profile, selecting one supported profile at random from the second set of supported profiles to be enabled.

3. The method according to any of the previous claims, wherein if the communication services subscribed under the selected supported profile are not available to the UE, the UE selects the next profile yielding the maximum of the similarity function after the selected profile in the second set of supported profiles.

4. The method according to any of the previous claims, wherein the similarity function is a cosine similarity function.

5. The method according to any of the previous claims, wherein the similarity function is a dot product similarity function.

6. The method according to any of the previous claims, further comprising:
measuring the time elapsed since the latest update of the profile;
upon the time is elapsed, reaching a given threshold; and
selecting a new profile.

7. The method according to any of the previous claims, further comprising:
updating, the context, usage preferences, and significant change of location of the UE;
transiting from the public network to a first private network, a second private network to the public network, wherein changes in the network comprises radio signal strength; and
selecting a new profile.

8. The method according to any of the previous claims, wherein the profile selection server is managed by the Original Equipment Manufacturer of the User Equipment.

9. A User Equipment (UE) configured to run a method to select a profile in the UE in operation, wherein the UE collaborates with an eSIM (104), wherein the UE and the eSIM(104) together are capable of supporting multiple profiles, wherein a plurality of supported profiles are stored in the eSIM (104), wherein each supported profile is set with a profile description, wherein the UE is set with usage preferences for the supported profiles in the form of a text, wherein the operation of the UE takes place in a context, comprising the steps of, to be all performed either by the UE, by a profile selection server or by the SIM (104):
obtaining a description of the context from a remote Large Language Model (LLM);
embedding the profile descriptions of the supported profiles, the context description, the usage preferences, to produce vectors for each, with real number coordinates;
selecting from the plurality of supported profiles, a first set of supported profiles which yield the maximum value of a similarity function of the embedded profile description and of the embedded context description; and
selecting from the first set of supported profiles, a second set of supported profiles which yield the maximum value of the similarity function of the embedded profile description and of the embedded usage preferences.

10. The UE according to claim 9, wherein the UE is configured to run the method comprising configuring a LLM assistant capable of requesting a remote LLM for a description of the context.

11. The UE according to claim 9 or 10, wherein the UE is configured to run the method comprising configuring a user to enable to choose the size of a token to be used for embeddings.

12. The UE according to any of claims 9 to 11, wherein the UE is configured to run the method comprising configuring the user to enable to map the supported profiles to own usage preferences.

13. The UE according to any of claim 9 to 12, wherein the eSIM (104) is a USIM provided with Logical Secure Elements, and wherein each of the supported profiles is programed in a respective Logical Secure Element.

14. The UE according to any of claims 9 to 13, wherein the similarity function is a cosine similarity function.

15. The UE according to any of claims 9 to 14, wherein the similarity function is a dot product similarity function.
